# EUROPEAN PATENT SPECIFICATION

(11) **EP 4 246 673 B1**
(45) Date of publication and mention of the grant of the patent: **08.04.2026**
(21) Application number: 22861673.6
(22) Date of filing: 22.08.2022
(51) Int. Cl.: H01M 50/105, H01M 50/211, H01M 10/647, H01M 10/613, H01M 10/655, H01M 10/653

(54) **SECONDARY BATTERY, METHOD FOR MANUFACTURING THE SAME AND BATTERY PACK**
SEKUNDÄRBATTERIE, VERFAHREN ZU IHRER HERSTELLUNG UND BATTERIEPAKET
BATTERIE SECONDAIRE, PROCEDE DE FABRICATION DE CETTE BATTERIE ET BLOC DEBATTERIES

(30) Priority: 24.08.2021 KR 20210111973; 19.08.2022 KR 20220104340
(43) Date of publication of application: 20.09.2023
(73) Proprietor: LG Energy Solution, Ltd., Seoul 07335 (KR)
(72) Inventor: CHUNG, Koo Seung, Daejeon 34122 (KR); OH, Sang Seung, Daejeon 34122 (KR); KIM, Hye Hyeon, Daejeon 34122 (KR); SUN, Kyung Eun, Daejeon 34122 (KR); PARK, Kyu Tae, Daejeon 34122 (KR)
(74) Representative: Plasseraud IP
(86) International application number: PCT/KR2022/012539
(87) International publication number: WO 2023/027464

(56) References cited:
- KR-A- 20120 060 707
- KR-A- 20160 032 929
- KR-A- 20160 036 495
- US-A1- 2010 227 216
- US-B2- 9 136 510
- US-B2- 9 401 501

## Description

### TECHNICAL FIELD

### CROSS-REFERENCE TO RELATED APPLICATION

The present application claims the benefit of the priority of Korean Patent Application Nos. 10-2021-0111973, filed on August 24, 2021, and 10-2022-0104340, filed on August 19, 2022.

### TECHNICAL FIELD

The present invention relates to a secondary battery, a method for manufacturing the same and a battery pack, and more particularly, to a secondary battery including a pouch having a novel structure in which cooling air transfer efficiency is improved, a method for manufacturing the same, and a battery pack.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can-type secondary battery, in which an electrode assembly is embedded in a metal can, and a pouch-type secondary battery, in which an electrode assembly is embedded in a pouch.

The cylindrical secondary battery includes an electrode assembly having a structure in which an electrode and a separator are wound in a jelly-roll shape, a can accommodating the electrode assembly, and a cap assembly mounted in an opening of the can.

The pouch-type secondary battery includes an electrode assembly in which electrodes and separators are alternately disposed, and a pouch accommodating the electrode assembly, and the pouch includes an accommodation part accommodating a monocell and a sealing part sealing the accommodation part.

The electrodes includes a positive electrode and a negative electrode.

The above-described pouch-type secondary battery may be manufactured in various forms because the electrode assembly in which the electrodes and the separators are alternately disposed and also may be easily changed in size and capacity. In addition, it is advantageous of improving energy density because a space of the pouch-type secondary battery is efficiently utilized.

In addition, the pouch is provided with a double side folding (DSF) part that seals an end of the sealing part in a double-folded state so as to increase in sealing force.

A battery pack provided with the pouch-type secondary battery having the above-described structure is provided. The battery pack includes a battery module provided to be disposed in a thickness direction and a cooling member provided on a side portion of the battery module to cool the plurality of pouch-type secondary batteries.

However, the battery pack has a problem in that since the sealing part of the pouch is provided as the DSF part, cold air of the cooling member is not sufficiently transferred to the accommodation part of the pouch. That is, since the DSF part is disposed between the cooling member and the accommodation part of the pouch, the cooling member and the accommodation part may not be in close contact with each other. Thus, the cold air of the cooling member may not be directly transferred to the accommodation part, and thus, it is a limit in improving the cooling air transfer efficiency. An example of a battery pouch can be found in US 9136510 B2.

### DISCLOSURE OF THE INVENTION

### TECHNICAL PROBLEM

An object of the present invention for solving the above problem is to provide a secondary battery in which a pouch having a novel structure is implemented to improve simplification of a process, and in particular, a cooling member and an accommodation part of the pouch are in close contact with each other, and thus, cool air of the cooling member is directly transferred to the accommodation part of the pouch to improve cooling air transfer efficiency, a method for manufacturing the same, and a battery pack.

### TECHNICAL SOLUTION

A secondary battery of the present invention for achieving the above object includes: an electrode assembly; and a pouch configured to accommodate the electrode assembly, wherein the pouch includes: two first covers provided on both surfaces of the electrode assembly in a thickness direction, respectively; two second covers provided on both surfaces of the electrode assembly in a full-width direction, respectively, wherein edge surfaces of the first cover and the second cover, which face each other, are sealed by a first sealing part, end surfaces of the first cover and the second cover, which are directed in the same direction, are sealed by a second sealing part, and the two second covers are in close contact with on both the surfaces of the electrode assembly in the full-width direction.

The first sealing part may be provided by sealing the edge surfaces of the first cover and the second cover, which face each other, and the first sealing part may be bent to be in close contact with a surface of the first cover.

The secondary battery may further include an adhesive layer through which the first sealing part adheres to the surface of the first cover.

The second sealing part may be provided by sealing the end surfaces of the two first covers, wherein the end surface of the second cover may be inserted between the end surfaces of the two first covers so as to be sealed together with the end surfaces of the first covers.

The first cover may have a structure in which a protective layer, a first metal layer, and an insulating layer are sequentially disposed from the inside to the outside, and the second cover may have a structure in which a protective layer, a second metal layer, and an insulating layer are sequentially disposed from the inside to the outside, wherein the second metal layer may have thermal conductivity greater than that of the first metal layer.

The first metal layer may be made of copper (Cu), and the second metal layer may be made of aluminum (Al).

A method for manufacturing a secondary battery according to the present invention includes: disposing two first covers that cover both surfaces of an electrode assembly in a thickness direction, respectively, and disposing two second covers that cover both surfaces of the electrode assembly in a full-width direction, respectively; a primary manufacturing process of forming a first sealing part that seals edge surfaces of the first cover and the second cover, which face each other, to manufacture a semi-assembled pouch; an accommodation process of accommodating the electrode assembly in the semi-assembled pouch; and a secondary manufacturing process of forming a second sealing part that seals end surfaces of the first cover and second cover, which are directed in the same direction, provided in the semi-assembled pouch to manufacture an assembled pouch, wherein, when the electrode assembly is accommodated in the semi-assembled pouch in the accommodation process, the two second covers are in close contact with both the surfaces of the electrode assembly in the full-width direction, respectively.

In the primary manufacturing process, the first sealing part may be formed by sealing the edge surfaces of the first cover and the second cover, which face each other, in a state of being in close contact with each other.

In the secondary manufacturing process, the second sealing part may be formed by folding the end surfaces of the two second covers to insert the folded end surfaces between the end surfaces of the two first covers and then thermally fusing the end surfaces of the two first covers to seal the end surfaces of the two first covers together with the end surfaces of the two second covers.

The method may further include, after the secondary manufacturing process, a bending process of bending the first sealing part to be in close contact with a surface of the first cover.

The bending process may further include a process of allowing the first sealing part to adhere to the surface of the first cover through an adhesive layer.

In the disposing process, the first cover may have a structure in which a protective layer, a first metal layer, and an insulating layer are sequentially disposed from the inside to the outside, and the second cover has a structure in which a protective layer, a second metal layer, and an insulating layer are sequentially disposed from the inside to the outside, wherein the second metal layer may have thermal conductivity greater than that of the first metal layer.

A battery pack of the present invention includes a battery module in which the secondary battery is provided in plurality, wherein the plurality of secondary batteries may be provided as the battery module in which first covers of a pouch are arranged to correspond to each other.

The battery pack may further include a cooling member that cools the battery module, wherein the cooling member may be provided to be in close contact with second covers of the pouch.

A heat dissipation pad may be further provided between the plurality of secondary batteries.

### ADVANTAGEOUS EFFECTS

The secondary battery of the present invention may include the pouch provided with the two first covers and the second-second covers. Here, the edge surfaces of the first cover and the second cover, which face each other, may be sealed by the first sealing part, and the end surfaces of the first cover and the second cover, which are directed in the same direction, may be sealed by the second sealing part. Due to these characteristics, the pouch having the novel structure may be manufactured. Particularly, the sealing part may be provided on the edge of the pouch so that the cooling member and the second cover of the pouch are in surface contact with each other to improve the cooling properties.

### BRIEF DESCRIPTION OF THE DRAWINGS

FIG. 1 is a perspective view of a secondary battery according to a first embodiment of the present invention.
FIG. 2 is an exploded perspective view illustrating a pouch of the secondary battery according to the first embodiment of the prevent invention.
FIG. 3 is a cross-sectional view of the secondary battery according to the first embodiment of the present invention.
FIG. 4 is an enlarged view of a portion A illustrated in FIG. 3.
FIG. 5 is a front view of the secondary battery according to the first embodiment of the present invention.
FIG. 6 is a cross-sectional view illustrating a stack structure with respect to a first cover according to the present invention.
FIG. 7 is a cross-sectional view illustrating a stack structure with respect to a second cover according to the present invention.
FIG. 8 is a flowchart illustrating a method for manufacturing the secondary battery according to the first embodiment of the present invention.
FIG. 9 is a perspective view illustrating a disposing process in the method for manufacturing the secondary battery according to the first embodiment of the present invention.
FIG. 10 is a perspective view illustrating a primary manufacturing process in the method for manufacturing the secondary battery according to the first embodiment of the present invention.
FIG. 11 is a front view illustrating an accommodation process in the method for manufacturing the secondary battery according to the first embodiment of the present invention.
FIG. 12 is a perspective view illustrating a secondary manufacturing process in the method for manufacturing the secondary battery according to the first embodiment of the present invention.
FIG. 13 is a perspective view illustrating a bending process in the method for manufacturing the secondary battery according to the first embodiment of the present invention.
FIG. 14 is a side view of a battery pack according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

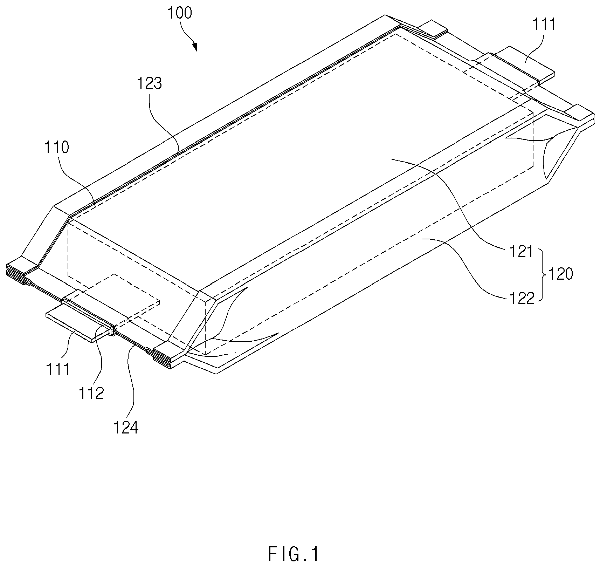

As illustrated in FIG. 1, a secondary battery 100 according to a first embodiment of the present invention includes an electrode assembly 110 and a pouch 120 accommodating the electrode assembly 110.

### Electrode assembly

The electrode assembly 110 has a structure in which electrodes and separators are alternately disposed. In addition, the electrode assembly 110 includes an electrode tab provided on each of the electrode, an electrode lead 111 coupled to the electrode tab, and a lead film 112 provided on the electrode lead 111.

### Pouch

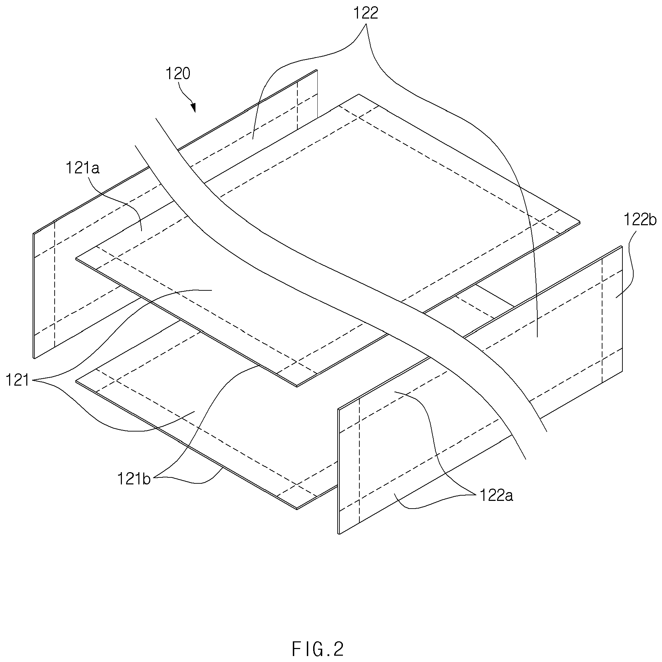

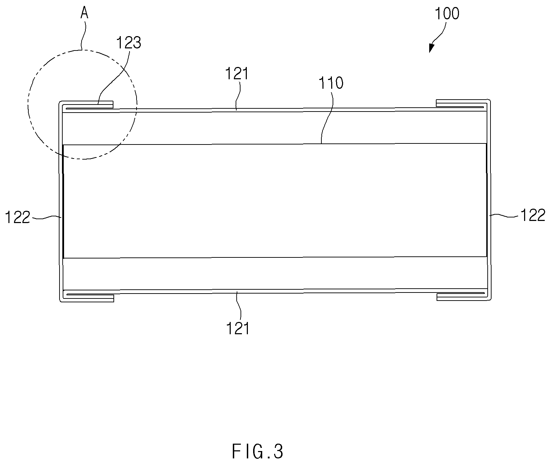

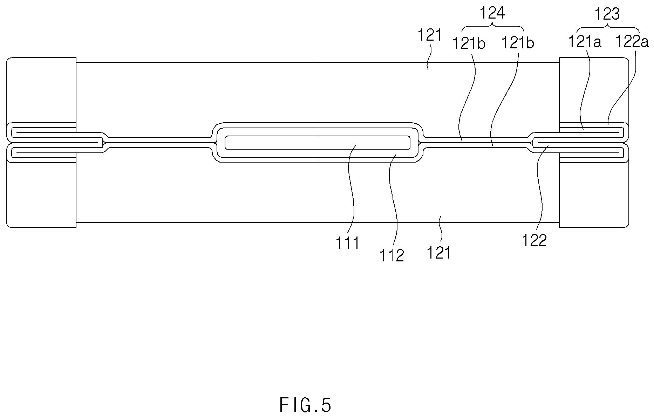

As illustrated in FIGS. 2 to 5, the pouch 120 is configured to sealingly accommodate the electrode assembly 110 and includes two first covers 121 respectively provided on both surfaces (top and bottom surfaces of the electrode assembly when viewed in FIG. 1) of the electrode assembly in a thickness direction and two second covers 122 respectively provided on both surfaces (left and right surfaces of the electrode assembly when viewed in FIG. 1) of the electrode assembly 110 in a full-width direction.

The first covers 121 are horizontally disposed on both the surfaces of the electrode assembly 110 in a vertical direction as illustrated in FIG. 1. In addition, each of the first covers 121 has a first edge surface 121a on each of both sides of the electrode assembly 110 in the full-width direction when viewed in FIG. 2 and a first end surface 121b on each of both ends of the electrode assembly 110 in a full-length direction when viewed in FIG. 2.

The second covers 122 are vertically disposed on both surface of the electrode assembly 110 in a left and right direction, respectively, when viewed in FIG. 1. In addition, each of the second covers 122 has a second edge surface 122a on each of both sides of the electrode assembly 110 in the vertical direction when viewed in FIG. 2 and a second end surface 121b on each of both ends of the electrode assembly 110 in the full-length direction when viewed in FIG. 2.

Here, the edge surfaces of the first cover 121 and the second cover 122, which face each other, have the same length for ease of sealing.

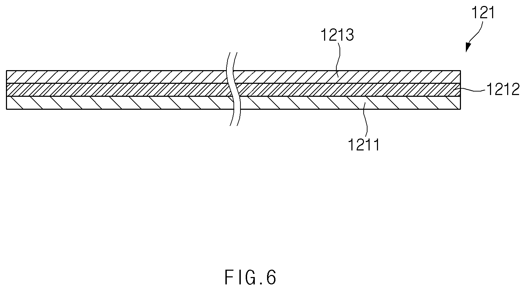

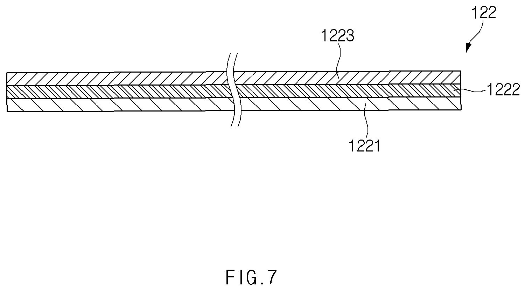

As illustrated in FIGS. 6 and 7, the first cover 121 has a structure in which a resin layer 1211, a metal layer 1212, and an insulating layer 1213 are stacked outward from the inside of the pouch. In addition, the second cover 122 has a structure in which a resin layer 1221, a second metal layer 1222, and an insulating layer 1223 are stacked inward from the inside of the pouch. Particularly, each of the first cover 121 and the second cover 122 have a rectangular film shape as illustrated in FIG. 2.

Here, the resin layer of the first cover and the resin layer of the second cover are made of the same material, and the insulating layer of the first cover and the insulating layer of the second cover are made of the same material. However, the first metal layer of the first cover and the metal layer of the second cover are made of different materials.

The two first covers have the same size. Alternatively, the two first covers may have different sizes depending on the stack structure of the electrode assembly. The two second covers have the same size. Alternatively, the two first covers may have different sizes depending on the stack structure of the electrode assembly.

Each of the first covers may be provided with two or more pouch films. That is, the first cover may be manufactured by connecting two or more pouch films according to an area of the electrode assembly.

The second cover may be provided with two or more pouch films. That is, the first cover may be manufactured by connecting two or more pouch films according to a thickness of the electrode assembly.

Here, each of the first cover 121 and the second cover 122 has a sealing structure that sealingly accommodates the electrode assembly 110. That is, the edge surfaces of the first cover 121 and the second cover 122, which face each other, are sealed by the first sealing part 123 to seal an edge surface of the pouch 120, and the end surfaces of the first cover 121 and the second cover 122, which are directed in the same direction, are sealed by the second sealing part 124 to seal front and rear surfaces of the electrode assembly 110.

That is, the first sealing part 123 is provided by sealing the first edge of the first cover 121 and the second edge of the second cover 122, which face each other, in a state of being in close contact with each other. Here, the first sealing part may be coated with an insulating material to improve insulation.

The second sealing part 124 is provided while the two first end surfaces 121b are sealed, and the second end surfaces 122b disposed on the two second covers 122 are provided to be sealed together with the end surface of the first cover 121 while being inserted between the first end surfaces 121b disposed on the two first cover 121. That is, the second sealing portion 124 is provided while the two first end surfaces 121b and the two second end surfaces 122b are sealed together.

In other words, the pouch 120 having an electrode assembly accommodation space may be manufactured while the two first covers 121 and the two second covers 122 are sealed by the first sealing part 123 and the second sealing part 124.

Here, the two second covers 122 may be provided to be in close contact with both the surfaces of the electrode assembly in a full-width direction, respectively. Thus, heat generated in the electrode assembly may be directly quickly released to the outside by the second cover, and as a result, the electrode assembly may be greatly suppressed from increasing in temperature.

The second metal layer 1222 of the second cover may be made of a metal material having thermal conductivity greater than that of the first metal layer 1212 of the first cover. For example, the first metal layer is made of copper (Cu), and the second metal layer is made of aluminum (Al), which has thermal conductivity greater than that of copper (Cu). That is, the present application is characterized in that the second metal layer of the second cover is applied as a metal having thermal conductivity greater than that of the first metal layer of the first cover, and due to this characteristic, the heat generated in the electrode assembly may be quickly released to the outside while being transferred to the second cover.

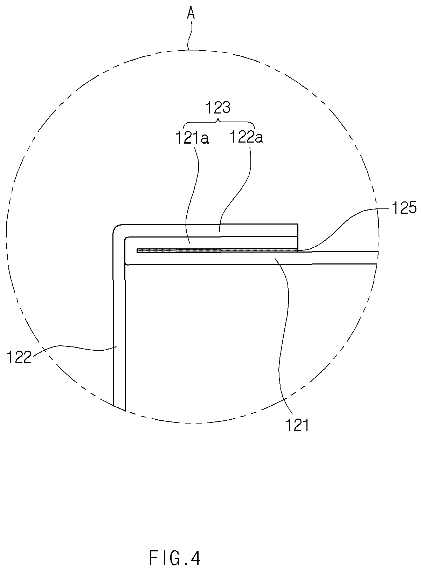

Referring to FIG. 4, the first sealing part 123 of the pouch 120 may be in contact with a surface of the first cover 121 while being in a direction of the first cover 121, and thus, the electrode assembly 110 may be reduced in volume, and an exposed area of an outer circumferential surface of the second cover 122 may be more largely secured. This allows the cooling member to be in close contact with the surface of the second cover 122, thereby securing a large contact area, and thus, cold air of the cooling member may be directly transferred to the surface of the pouch 120 to improve cold air transfer efficiency.

The pouch 120 further includes an adhesive layer 125. Here, the adhesive layer 125 is provided between the first sealing part 123 and the first cover 121, and the first sealing part 123 adheres to the surface of the first cover 121. Thus, the first sealing part 123 may be attached to the surface of the first cover 121 so as not to be separated.

Since the pouch 120 having such a configuration includes the two first covers 121 and the two second covers 122, there is no need to perform a separate forming process, and thus, the pouch 120 having a novel structure may be implemented Particularly, the process may be improved in simplification, and as a result, workability and efficiency may be improved. Furthermore, an externally exposed area of the second cover 122, which is a side portion of the pouch, may increase to improve adhesion with the cooling member, thereby improving the cold air transfer efficiency.

Thus, in the secondary battery 100 according to the first embodiment of the present invention, the pouch 120 having the novel structure and including the first cover, the second cover, the first sealing part, and the second sealing part may be manufactured, and thus, the simplification of the process may be improved, and in particular, the adhesion with the cooling device may increase to improve the cold air transfer efficiency.

Hereinafter, a method for manufacturing the secondary battery according to the first embodiment of the present invention will be described.

### [Method for manufacturing secondary battery according to first embodiment of the present invention]

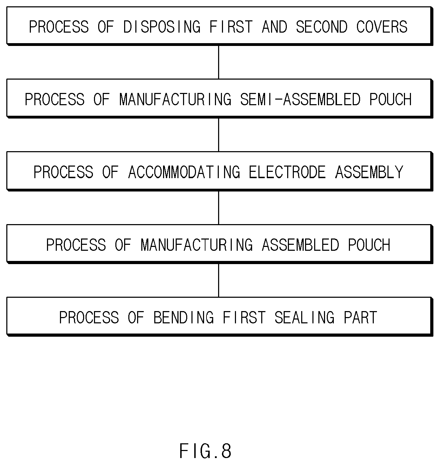

As illustrated in FIG. 8, a method for manufacturing the secondary battery according to the present invention includes a disposition process, a primary manufacturing process, an accommodation process, a secondary manufacturing process, and a bending process.

### Disposition process

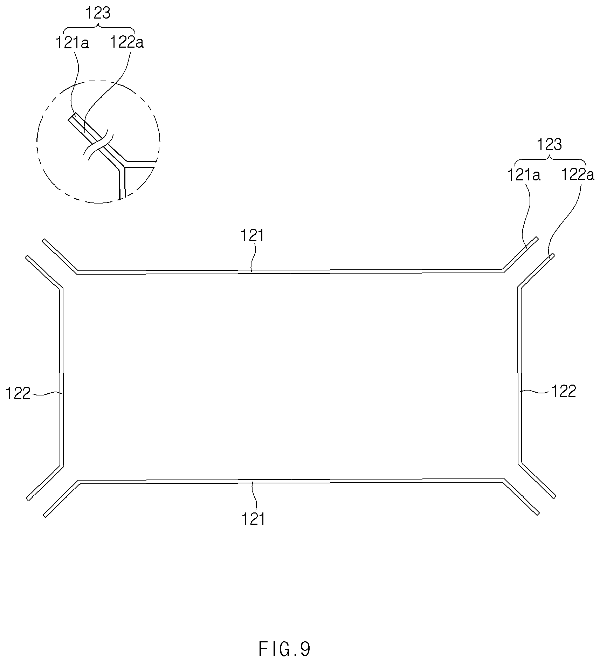

In the disposing process, as illustrated in FIG. 9, each of two first covers 121 covering both surfaces of the electrode assembly 110 in a thickness direction is disposed. Next, each of two second covers 122 covering both surfaces of the electrode assembly 110 in a full-width direction is disposed.

Here, each of the first covers 121 has a first edge surface 121a on each of both sides of the electrode assembly 110 in a full-width direction when viewed in FIG. 2 and a first end surface 121b on each of both ends of the electrode assembly 110 in a full-length direction when viewed in FIG. 2. Each of the second covers 122 has a second edge surface 122a on each of both sides of the electrode assembly 110 in the vertical direction when viewed in FIG. 2 and a second end surface 121b on each of both ends of the electrode assembly 110 in the full-length direction when viewed in FIG. 2.

The edge surfaces of the first cover 121 and the second cover 122, which face each other, have the same length.

Referring to FIGS. 6 and 7, the first cover 121 has a structure in which a resin layer 1211, a metal layer 1212, and an insulating layer 1213 are stacked outward from the inside of the pouch. In addition, the second cover 122 has a structure in which a resin layer 1221, a second metal layer 1222, and an insulating layer 1223 are stacked inward from the inside of the pouch.

The second metal layer 1222 of the second cover may be made of a metal material having thermal conductivity greater than that of the first metal layer 1212 of the first cover. For example, the first metal layer is made of copper (Cu), and the second metal layer is made of aluminum (Al), which has thermal conductivity greater than that of copper (Cu).

### Primary manufacturing process

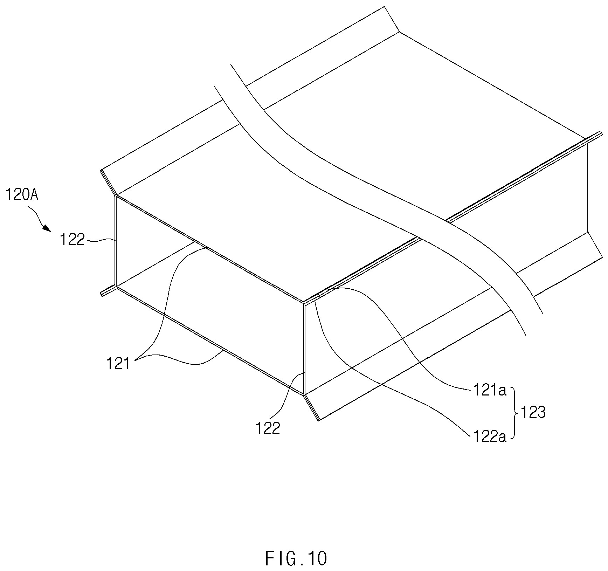

As illustrated in FIG. 10, in the primary manufacturing process, a first sealing part 123 sealing edge surfaces of the first cover 121 and the second cover 122, which face each other, is formed to manufacture a semi-assembled pouch 120A. Here, the first sealing part 123 is formed by sealing the edge surfaces of the first cover 121 and the second cover 122, which face each other, in a state of being in close contact with each other. Then, the semi-assembled pouch 120A having a rectangular frame shape may be manufactured.

### Accommodation process

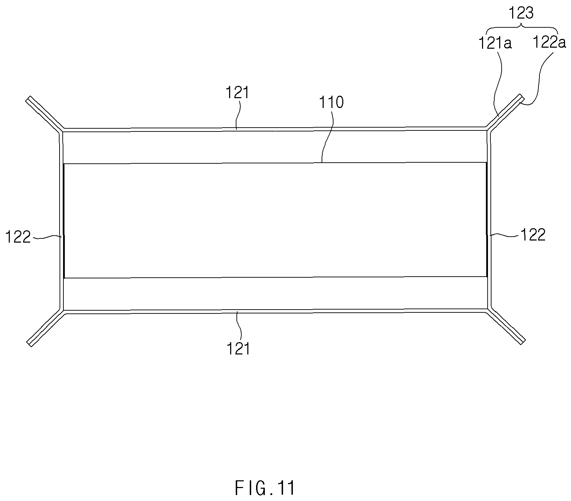

In the accommodation process, as illustrated in FIG. 11, the electrode assembly 110 is accommodated in the semi-assembled pouch 120A.

Here, when the electrode assembly 110 is accommodated in the semi-assembled pouch 120A, the two second covers 122 are in close contact with both the surfaces of the electrode assembly 110 in the full-width direction, respectively. Thus, heat generated in the electrode assembly due to the close contact between the second cover and the electrode assembly may be quickly absorbed to the second cover and then released to the outside, and as a result, the electrode assembly may be greatly suppressed from increasing in temperature.

Particularly, since the second metal layer provided in the second cover is made of aluminum, thermal conductivity may be improved, and as a result, the electrode assembly may be greatly suppressed from increasing in temperature.

### Secondary manufacturing process

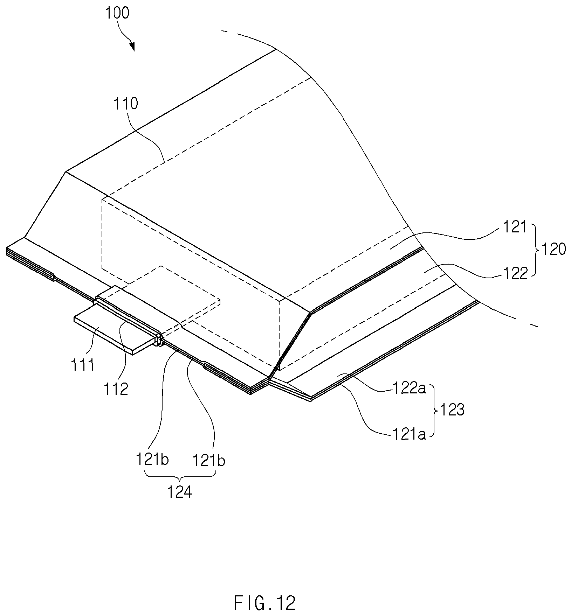

In the secondary manufacturing process, as illustrated in FIG. 12, a second sealing part 124 that seals end surfaces of the first cover 121 and the second cover 122, which are directed in the same direction, provided in the semi-assembled pouch 120A is formed to manufacture an assembled pouch 120 (hereinafter, referred to a pouch).

That is, the end surfaces of the two second covers 122 are folded and then inserted between the end surfaces of the two first covers 121. Next, the end surfaces of the two first covers 121 are in close contact with each other. Next, the end surfaces of the two first covers 121 are thermally fused to be sealed together with the end surfaces of the two second covers 122. Then, the second sealing part 124 may be manufactured.

After the secondary manufacturing process, the method may further include a bending process of selectively bending the first sealing part 123 to adhere to the surface of the first cover 121.

### Bending process

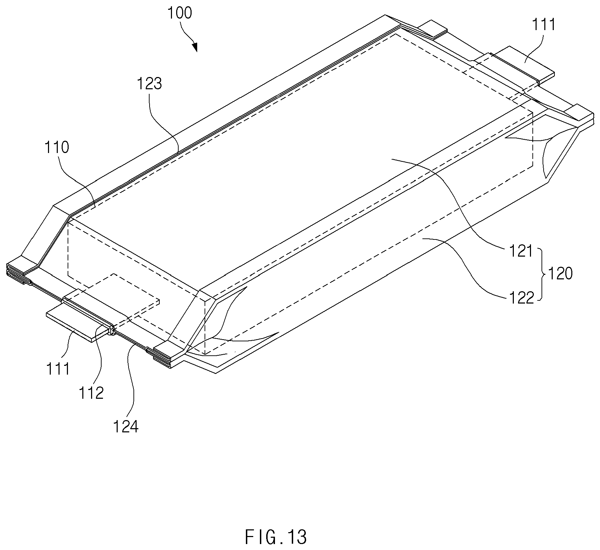

In the bending process, as illustrated in FIG. 13, the first sealing part 123 is bent toward the first cover 121 so as to be in close contact with the surface of the first cover 121.

Here, the bending process may further include a process of bonding the first sealing part 123 to the surface of the first cover 121 through the adhesive layer 125 to increase in fixing force of the first sealing part 123.

When the above processes are completed, the secondary battery 100 as illustrated in FIG. 1 may be manufactured.

Hereinafter, in descriptions of another embodiment of the present invention, constituents having the same function as the above-mentioned embodiment have been given the same reference numeral in the drawings, and thus duplicated description will be omitted.

### [Battery pack according to second embodiment of the present invention]

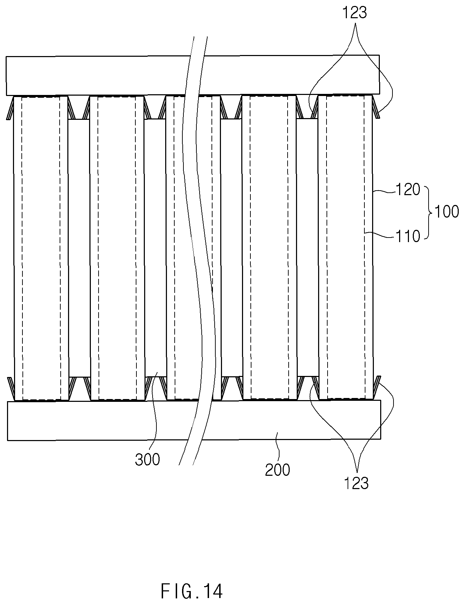

A battery pack according to a second embodiment of the present invention includes a plurality of secondary batteries 100 as illustrated in FIG. 14. Here, each of the secondary batteries 100 includes an electrode assembly 110 and a pouch 120, and the pouch 120 includes two first covers 121 respectively provided on both surfaces of the electrode assembly 110 in a thickness direction, and two second covers 122 respectively provided on both surfaces of the electrode assembly 110 in a full-width direction.

The secondary battery 100 has the same configuration and function as the secondary battery described in the first embodiment, and thus overlapping descriptions will be omitted.

Therefore, since the battery pack according to the second embodiment of the present invention includes the pouch 120 having a novel structure, simplification of the manufacturing and process may be improved, and productivity may be improved.

The battery pack according to the second embodiment of the present invention includes a cooling member 200 that cools a battery module, and the cooling member 200 is in close contact with the second cover 122 of the pouch 120.

Here, the cooling member 200 may be in a surface contact with the second cover 122 of the pouch 120, and thus, cold air generated from the cooling member 200 may be directly transferred to the second cover 122, thereby improving cold air transfer efficiency.

The battery pack according to the second embodiment of the present invention further includes a heat dissipation pad 300 provided between the plurality of secondary batteries 100, and the heat dissipation pad 300 may release heat generated from the secondary batteries 100 to improve the cooling efficiency.

Accordingly, the scope of the present invention is defined by the appended claims.

### [Description of the Symbols]

100: Secondary battery
110: Electrode assembly
111: Electrode lead
112: Lead film
120: Pouch
121: First cover
121a: First edge surface
121b: First end surface
122: Second cover
122a: Second edge surface
122b: Second end surface
123: First sealing part
124: Second sealing part
125: Adhesive layer
200: Cooling member
300: Heat dissipation pad

## Claims

1. A secondary battery (100) comprising:
an electrode assembly (110); and
a pouch (120) configured to accommodate the electrode assembly (110),
wherein the pouch (120) comprises:
two first covers (121) provided on both surfaces of the electrode assembly (110) in a thickness direction, respectively;
two second covers (122) provided on both surfaces of the electrode assembly (110) in a full-width direction, respectively,
**characterized in that** edge surfaces (121a, 122a) of the first cover (121) and the second cover (122), which face each other, are sealed by a first sealing part (123),
end surfaces (121b, 122b) of the first cover (121) and the second cover (122), which are directed in the same direction, are sealed by a second sealing part (124), and
the two second covers (122) are in close contact with on both the surfaces of the electrode assembly (110) in the full-width direction.

2. The secondary battery (100) of claim 1, wherein the first sealing part (123) is provided by sealing the edge surfaces (121a, 122a) of the first cover (121) and the second cover (122), which face each other, and
the first sealing part (123) is bent to be in close contact with a surface of the first cover (121).

3. The secondary battery (100) of claim 2, further comprising an adhesive layer (125) through which the first sealing part (123) adheres to the surface of the first cover (121).

4. The secondary battery (100) of claim 1, wherein the second sealing part (124) is provided by sealing the end surfaces (121b) of the two first covers (121),
wherein the end surface (122b) of the second cover (122) is inserted between the end surfaces (121b) of the two first covers (121) so as to be sealed together with the end surfaces (121b) of the first covers (121).

5. The secondary battery (100) of claim 1, wherein the first cover (121) has a structure in which a protective layer (1211), a first metal layer (1212), and an insulating layer (1213) are sequentially disposed from the inside to the outside, and
the second cover (122) has a structure in which a protective layer (1221), a second metal layer (1222), and an insulating layer (1223) are sequentially disposed from the inside to the outside,
wherein the second metal layer (1222) has thermal conductivity greater than that of the first metal layer (1212).

6. The secondary battery (100) of claim 5, wherein the first metal layer (1212) is made of copper (Cu), and
the second metal layer (1222) is made of aluminum (Al).

7. A method for manufacturing a secondary battery (100), the method comprising:
disposing two first covers (121) that cover both surfaces of an electrode assembly (110) in a thickness direction, respectively, and disposing two second covers (122) that cover both surfaces of the electrode assembly (110) in a full-width direction, respectively;
**characterized by** a primary manufacturing process of forming a first sealing part (123) that seals edge surfaces (121a, 122a) of the first cover (121) and the second cover (122), which face each other, to manufacture a semi-assembled pouch (120A);
an accommodation process of accommodating the electrode assembly (110) in the semi-assembled pouch (120A); and
a secondary manufacturing process of forming a second sealing part (124) that seals end surfaces (121b, 122b) of the first cover (121) and second cover (122), which are directed in the same direction, provided in the semi-assembled pouch (120A) to manufacture an assembled pouch (120),
wherein, when the electrode assembly (110) is accommodated in the semi-assembled pouch (120A) in the accommodation process, the two second covers (122) are in close contact with both the surfaces of the electrode assembly (110) in the full-width direction, respectively.

8. The method of claim 7, wherein, in the primary manufacturing process, the first sealing part (123) is formed by sealing the edge surfaces (121a, 122a) of the first cover (121) and the second cover (122), which face each other, in a state of being in close contact with each other.

9. The method of claim 7, wherein, in the secondary manufacturing process, the second sealing part (124) is formed by folding the end surfaces (122b) of the two second covers (122) to insert the folded end surfaces (122b) between the end surfaces (121b) of the two first covers (121) and then thermally fusing the end surfaces (121b) of the two first covers (121) to seal the end surfaces (121b) of the two first covers (121) together with the end surfaces (122b) of the two second covers (122).

10. The method of claim 7, further comprising, after the secondary manufacturing process, a bending process of bending the first sealing part (123) to be in close contact with a surface of the first cover (121).

11. The method of claim 10, wherein the bending process further comprises a process of allowing the first sealing part (123) to adhere to the surface of the first cover (121) through an adhesive layer (125).

12. The method of claim 7, wherein, in the disposing process, the first cover (121) has a structure in which a protective layer (1211), a first metal layer (1212), and an insulating layer (1213) are sequentially disposed from the inside to the outside, and the second cover (122) has a structure in which a protective layer (1221), a second metal layer (1222), and an insulating layer (1223) are sequentially disposed from the inside to the outside,
wherein the second metal layer (1222) has thermal conductivity greater than that of the first metal layer (1212).

13. A battery pack comprising a battery module in which the secondary battery (100) of claim 1 is provided in plurality,
wherein the plurality of secondary batteries (100) are provided as the battery module in which first covers (121) of a pouch (120) are arranged to correspond to each other.

14. The battery pack of claim 13, further comprising a cooling member (200) that cools the battery module,
wherein the cooling member (200) is provided to be in close contact with second covers (122) of the pouch (120).

15. The battery pack of claim 13, wherein a heat dissipation pad (300) is further provided between the plurality of secondary batteries (100).

## Patentansprüche

1. Sekundärbatterie (100), umfassend:
eine Elektrodenanordnung (110); und
einen Beutel (120), welcher dazu eingerichtet ist, die Elektrodenanordnung (110) aufzunehmen,
wobei der Beutel (120) umfasst:
zwei erste Abdeckungen (121), welche in einer Dickenrichtung jeweils an beiden Flächen der Elektrodenanordnung (110) bereitgestellt sind;
zwei zweite Abdeckungen (122), welche in einer gesamten Breitenrichtung jeweils an beiden Flächen der Elektrodenanordnung (110) bereitgestellt sind,
**dadurch gekennzeichnet, dass** Randflächen (121a, 122a) der ersten Abdeckung (121) und der zweiten Abdeckung (122), welche einander zugewandt sind, durch einen ersten Dichtungsteil (123) abgedichtet sind,
Endflächen (121b, 122b) der ersten Abdeckung (121) und der zweiten Abdeckung (122), welche in die gleiche Richtung weisen, durch einen zweiten Dichtungsteil (124) abgedichtet sind und
die beiden zweiten Abdeckungen (122) in der gesamten Breitenrichtung in einem engen Kontakt mit beiden der Flächen der Elektrodenanordnung (110) sind.

2. Sekundärbatterie (100) nach Anspruch 1, wobei der erste Dichtungsteil (123) durch ein Abdichten der Randflächen (121a, 122a) der ersten Abdeckung (121) und der zweiten Abdeckung (122) bereitgestellt ist, welche einander zugewandt sind, und
der erste Dichtungsteil (123) derart gebogen ist, dass er in einem engen Kontakt mit einer Fläche der ersten Abdeckung (121) ist.

3. Sekundärbatterie (100) nach Anspruch 2, ferner umfassend eine adhäsive Schicht (125), durch welche der erste Dichtungsteil (123) an der Fläche der ersten Abdeckung (121) haftet.

4. Sekundärbatterie (100) nach Anspruch 1, wobei der zweite Dichtungsteil (124) durch ein Abdichten der Endflächen (121b) der beiden ersten Abdeckungen (121) bereitgestellt ist,
wobei die Endfläche (122b) der zweiten Abdeckung (122) derart zwischen den Endflächen (121b) der beiden ersten Abdeckungen (121) eingefügt ist, dass sie zusammen mit den Endflächen (121b) der ersten Abdeckungen (121) abgedichtet ist.

5. Sekundärbatterie (100) nach Anspruch 1, wobei die erste Abdeckung (121) eine Struktur aufweist, in welcher eine Schutzschicht (1211), eine erste Metallschicht (1212) und eine isolierende Schicht (1213) von dem Inneren zu dem Äußeren sequentiell angeordnet sind, und
die zweite Abdeckung (122) eine Struktur aufweist, in welcher eine Schutzschicht (1221), eine zweite Metallschicht (1222) und eine isolierende Schicht (1223) von dem Inneren zu dem Äußeren sequentiell angeordnet sind,
wobei die zweite Metallschicht (1222) eine thermische Leitfähigkeit aufweist, welche größer ist als die der ersten Metallschicht (1212).

6. Sekundärbatterie (100) nach Anspruch 5, wobei die erste Metallschicht (1212) aus Kupfer (Cu) hergestellt ist und
die zweite Metallschicht (1222) aus Aluminium (AI) hergestellt ist.

7. Verfahren zur Herstellung einer Sekundärbatterie (100), wobei das Verfahren umfasst:
Anordnen von zwei ersten Abdeckungen (121), welche in einer Dickenrichtung jeweils beide Flächen einer Elektrodenanordnung (110) abdecken, und Anordnen von zwei zweiten Abdeckungen (122), welche in einer gesamten Breitenrichtung jeweils beide Flächen der Elektrodenanordnung (110) abdecken;
**gekennzeichnet durch** einen primären Herstellungsprozess eines Bildens eines ersten Abdichtungsteils (123), welcher Randflächen (121a, 122a) der ersten Abdeckung (121) und der zweiten Abdeckung (122) abdichtet, welche einander zugewandt sind, um einen semi-assemblierten Beutel (120A) herzustellen;
einen Aufnahmeprozess eines Aufnehmens der Elektrodenanordnung (110) in dem semi-assemblierten Beutel (120A); und
einen sekundären Herstellungsprozess eines Bildens eines zweiten Abdichtungsteils (124), welcher Endflächen (121b, 122b) der ersten Abdeckung (121) und der zweiten Abdeckung (122) abdichtet, welche in die gleiche Richtung weisen und welche in dem in dem semi-assemblierten Beutel (120A) bereitgestellt sind, um einen assemblierten Beutel (120) herzustellen,
wobei, wenn die Elektrodenanordnung (110) in dem Aufnahmeprozess in dem semi-assemblierten Beutel (120A) aufgenommen wird, die zwei zweiten Abdeckungen (122) in der gesamten Breitenrichtung jeweils in einem engen Kontakt mit beiden der Flächen der Elektrodenanordnung (110) sind.

8. Verfahren nach Anspruch 7, wobei, in dem primären Herstellungsprozess, der erste Dichtungsteil (123) durch ein Abdichten der Randflächen (121a, 122a) der ersten Abdeckung (121) und der zweiten Abdeckung (122), welche einander zugewandt sind, in einem Zustand gebildet wird, in welchem sie in einem engen Kontakt zueinander sind.

9. Verfahren nach Anspruch 7, wobei, in dem sekundären Herstellungsprozess, der zweite Dichtungsteil (124) durch ein Falten der Endflächen (122b) der beiden zweiten Abdeckungen (122) gebildet wird, um die gefalteten Endflächen (122b) zwischen die Endflächen (121b) der beiden ersten Abdeckungen (121) einzufügen und dann die Endflächen (121b) der beiden ersten Abdeckungen (121) thermisch zu verschmelzen, um die Endflächen (121b) der beiden ersten Abdeckungen (121) zusammen mit den Endflächen (122b) der beiden zweiten Abdeckungen (122) abzudichten.

10. Verfahren nach Anspruch 7, ferner umfassend, nach dem sekundären Herstellungsprozess, einen Biegeprozess eines derartigen Biegens des ersten Dichtungsteils (123), dass er in einem engen Kontakt mit einer Fläche der ersten Abdeckung (121) ist.

11. Verfahren nach Anspruch 10, wobei der Biegeprozess ferner einen Prozess eines Ermöglichens umfasst, dass der erste Dichtungsteil (123) durch eine adhäsive Schicht (125) an der Fläche der ersten Abdeckung (121) haftet.

12. Verfahren nach Anspruch 7, wobei, in dem Anordnungsprozess, die erste Abdeckung (121) eine Struktur aufweist, in welcher eine Schutzschicht (1211), eine erste Metallschicht (1212) und eine isolierende Schicht (1213) von dem Inneren zu dem Äußeren sequentiell angeordnet sind, und die zweite Abdeckung (122) eine Struktur aufweist, in welcher eine Schutzschicht (1221), eine zweite Metallschicht (1222) und eine isolierende Schicht (1223) von dem Inneren zu dem Äußeren sequentiell angeordnet sind,
wobei die zweite Metallschicht (1222) eine thermische Leitfähigkeit aufweist, welche größer ist als die der ersten Metallschicht (1212).

13. Batteriepack, umfassend ein Batteriemodul, in welchem die Sekundärbatterie (100) nach Anspruch 1 in einer Mehrzahl bereitgestellt ist,
wobei die Mehrzahl von Sekundärbatterien (100) als das Batteriemodul bereitgestellt ist, in welchem erste Abdeckungen (121) eines Beutels (120) derart angeordnet sind, dass sie einander entsprechen.

14. Batteriepack nach Anspruch 13, ferner umfassend ein Kühlelement (200), welches das Batteriemodul kühlt,
wobei das Kühlelement (200) derart bereitgestellt ist, dass es in einem engen Kontakt mit zweiten Abdeckungen (122) des Beutels (120) ist.

15. Batteriepack nach Anspruch 13, wobei ein Wärmeableitungspad (300) ferner zwischen der Mehrzahl von Sekundärbatterien (100) bereitgestellt ist.

## Revendications

1. Batterie secondaire (100) comprenant :
un ensemble électrode (110) ; et
une poche (120) configurée pour l'installation de l'ensemble électrode (110) ;
dans laquelle la poche (120) comprend :
deux premiers couvercles (121) fournis sur les deux surfaces de l'ensemble électrode (110) dans un sens d'épaisseur, respectivement ;
deux seconds couvercles (122) fournis sur les deux surfaces de l'ensemble électrode (110) dans un sens de pleine largeur, respectivement,
**caractérisée en ce que** des surfaces de bord (121a, 122a) du premier couvercle (121) et du second couvercle (122), qui se font face, sont scellées par une première partie d'étanchéité (123),
des surfaces d'extrémité (121b, 122b) du premier couvercle (121) et du second couvercle (122), qui sont dirigées dans le même sens, sont scellées par une seconde partie d'étanchéité (124), et
les deux seconds couvercles (122) sont en contact étroit avec sur les deux surfaces de l'ensemble électrode (110) dans le sens de pleine largeur.

2. Batterie secondaire (100) selon la revendication 1, dans laquelle la première partie d'étanchéité (123) est fournie en scellant les surfaces de bord (121a, 122a) du premier couvercle (121) et du second couvercle (122), qui se font face, et
la première partie d'étanchéité (123) est courbée pour être en contact étroit avec une surface du premier couvercle (121).

3. Batterie secondaire (100) selon la revendication 2, comprenant en outre une couche adhésive (125) par le biais de laquelle la première partie d'étanchéité (123) adhère à la surface du premier couvercle (121).

4. Batterie secondaire (100) selon la revendication 1, dans laquelle la seconde partie d'étanchéité (124) est fournie en scellant les surfaces d'extrémité (121b) des deux premiers couvercles (121),
dans laquelle la surface d'extrémité (122b) du second couvercle (122) est insérée entre les surfaces d'extrémité (121b) des deux premiers couvercles (121) de manière à être scellée conjointement avec les surfaces d'extrémité (121b) des premiers couvercles (121).

5. Batterie secondaire (100) selon la revendication 1, dans laquelle le premier couvercle (121) a une structure dans laquelle une couche protectrice (1211), une première couche métallique (1212) et une couche isolante (1213) sont disposées séquentiellement de l'intérieur vers l'extérieur, et
le second couvercle (122) a une structure dans laquelle une couche protectrice (1221), une seconde couche métallique (1222) et une couche isolante (1223) sont disposées séquentiellement de l'intérieur vers l'extérieur,
dans laquelle la seconde couche métallique (1222) a une conductivité thermique supérieure à celle de la première couche métallique (1212).

6. Batterie secondaire (100) selon la revendication 5, dans laquelle la première couche métallique (1212) est faite de cuivre (Cu), et
la seconde couche métallique (1222) est faite d'aluminium (AI).

7. Procédé de fabrication d'une batterie secondaire (100), le procédé comprenant :
la disposition de deux premiers couvercles (121) qui recouvrent les deux surfaces d'un ensemble électrode (110) dans un sens d'épaisseur, respectivement, et la disposition de deux seconds couvercles (122) qui recouvrent les deux surfaces de l'ensemble électrode (110) dans un sens de pleine largeur, respectivement ;
**caractérisé par** un procédé de fabrication primaire consistant à former une première partie d'étanchéité (123) qui scelle des surfaces de bord (121a, 122a) du premier couvercle (121) et du second couvercle (122), qui se font face, pour fabriquer une poche semi-assemblée (120A) ;
un procédé d'installation consistant à installer l'ensemble électrode (110) dans la poche semi-assemblée (120A) ; et
un procédé de fabrication secondaire consistant à former une seconde partie d'étanchéité (124) qui scelle des surfaces d'extrémité (121b, 122b) du premier couvercle (121) et du second couvercle (122), qui sont dirigés dans le même sens, fournie dans la poche semi-assemblée (120A) pour fabriquer une poche (120) assemblée,
dans lequel, lorsque l'ensemble électrode (110) est installé dans la poche semi-assemblée (120A) dans le procédé d'installation, les deux seconds couvercles (122) sont en contact étroit avec les deux surfaces de l'ensemble électrode (110) dans le sens de pleine largeur, respectivement.

8. Procédé selon la revendication 7, dans lequel, dans le procédé de fabrication primaire, la première partie d'étanchéité (123) est formée en scellant les surfaces de bord (121a, 122a) du premier couvercle (121) et du second couvercle (122), qui se font face, dans un état où ils sont en contact étroit.

9. Procédé selon la revendication 7, dans lequel, dans le procédé de fabrication secondaire, la seconde partie d'étanchéité (124) est formée en pliant les surfaces d'extrémité (122b) des deux seconds couvercles (122) pour insérer les surfaces d'extrémité (122b) pliées entre les surfaces d'extrémité (121b) des deux premiers couvercles (121) puis en soudant thermiquement les surfaces d'extrémité (121b) des deux premiers couvercles (121) pour sceller les surfaces d'extrémité (121b) des deux premiers couvercles (121) conjointement avec les surfaces d'extrémité (122b) des deux seconds couvercles (122).

10. Procédé selon la revendication 7, comprenant en outre, après le procédé de fabrication secondaire, un procédé de courbure consistant à courber la première partie d'étanchéité (123) pour qu'elle soit en contact étroit avec une surface du premier couvercle (121).

11. Procédé selon la revendication 10, dans lequel le procédé de courbure comprend en outre un procédé consistant à permettre à la première partie d'étanchéité (123) d'adhérer à la surface du premier couvercle (121) par le biais d'une couche adhésive (125).

12. Procédé selon la revendication 7, dans lequel, dans le procédé de disposition, le premier couvercle (121) a une structure dans laquelle une couche protectrice (1211), une première couche métallique (1212) et une couche isolante (1213) sont disposées séquentiellement de l'intérieur vers l'extérieur, et le second couvercle (122) a une structure dans laquelle une couche protectrice (1221), une seconde couche métallique (1222) et une couche isolante (1223) sont disposées séquentiellement de l'intérieur vers l'extérieur,
dans lequel la seconde couche métallique (1222) a une conductivité thermique supérieure à celle de la première couche métallique (1212).

13. Bloc-batterie comprenant un module de batterie dans lequel la batterie secondaire (100) selon la revendication 1 est fournie en pluralité,
dans lequel la pluralité de batteries secondaires (100) sont fournies en tant que module de batterie dans lequel les premiers couvercles (121) d'une poche (120) sont agencés pour correspondre l'un à l'autre.

14. Bloc-batterie selon la revendication 13, comprenant en outre un élément de refroidissement (200) qui refroidit le module de batterie,
dans lequel l'élément de refroidissement (200) est fourni pour être en contact étroit avec des seconds couvercles (122) de la poche (120).

15. Bloc-batterie selon la revendication 13, dans lequel un tampon de dissipation thermique (300) est en outre fourni entre la pluralité de batteries secondaires (100).
